# EUROPÄISCHE PATENTSCHRIFT

(11) **EP 2 521 632 B1**
(45) Veröffentlichungstag und Bekanntmachung des Hinweises auf die Patenterteilung: **02.10.2013**
(21) Anmeldenummer: 10810738.4
(22) Anmeldetag: 27.12.2010
(51) Int. Cl.: B23Q 7/04, B25J 15/04

(54) **WERKZEUGWECHSLER**
TOOL CHANGER
DISPOSITIF DE CHANGEMENT D'OUTIL

(30) Priorität: 06.01.2010 DE 102010004085
(43) Veröffentlichungstag der Anmeldung: 14.11.2012
(73) Patentinhaber: DE-STA-CO Europe GmbH, 61440 Oberursel (DE)
(72) Erfinder: GRUPP, Michael, 61169 Friedberg (DE)
(74) Vertreter: Wolf, Michael
(86) Internationale Anmeldenummer: PCT/DE2010/001517
(87) Internationale Veröffentlichungsnummer: WO 2011/082702

(56) Entgegenhaltungen:
- DE-A1- 10 050 619
- DE-A1-102007 016 300

## Beschreibung

Die Erfindung betrifft einen Werkzeugwechsler gemäß Oberbegriff des unabhängigen Patentanspruchs 1.

Solche Werkzeugwechsler kommen insbesondere zur Verwendung an den Enden der Arme von Robotern, wobei es sich bei den an den Werkzeugwechslern anzuordnenden Werkzeugen in der Regel um Greifwerkzeuge, Schweißzangen, Vakuumgreifer, Spannvorrichtungen oder dergleichen Geräte handelt.

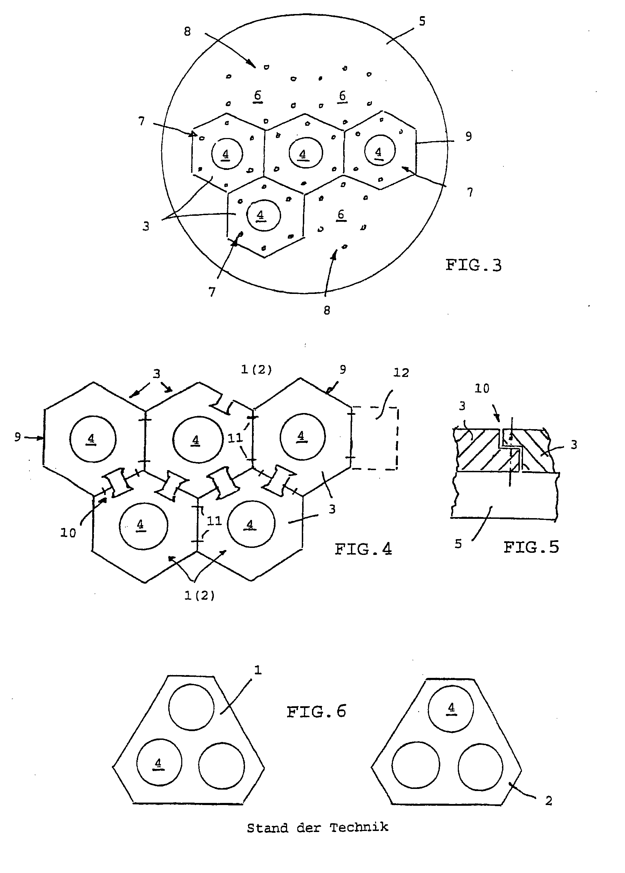

Derartige Werkzeugwechsler sind grundsätzlich bekannt und kommen mit den unterschiedlichsten Konstruktionen zur Verwendung. Nur beispielsweise sei für solche Werkzeugwechsler auf folgende Druckschriften verwiesen: DE 100 50 619 B4, DE 10 2007 016 300 A1, DE 10 2005 031 803 A1 und DE 20 2005 010 693 U1. Solchen Werkzeugwechslern ist ganz allgemein folgender Aufbau zu eigen: Sie bestehen aus einem zweiteiligen Gebilde, dessen Teile miteinander mittels ineinander fügbarer Verrastungselemente (Kopplungsteile) lös- und verbindbar ausgebildet sind, wobei der eine Teil mittels Verbindungselementen einem Handhabungsgerät (beispielsweise Roboterarm) befestigbar zuzuordnen und der andere, ebenfalls mit Verbindungselementen versehene Teil als Halter für ein zuzuordnendes Werkzeug ausgebildet ist. Mit Rücksicht auf unterschiedliche, von den Werkzeugen zu bewältigende Belastungen werden unterschiedlich dimensionierte Baureihen von Werkzeugwechslern zur Verfügung gestellt, die im Einzelnen belastungsorientiert ausgewählt und einerseits am Roboterarm und andererseits am Werkzeug installiert bzw. befestigt werden. Entscheidend ist dabei, dass der zweiteilige, in sich trennbare Werkzeugwechsler in seinem Verbindungsbereich der jeweilig erwartbaren Belastung genügt. Daran orientiert; sind auch schon Werkzeugwechsler entwickelt worden und in Gebrauch, die, zu einer Einheit zusammengefasst, beispielsweise drei im Dreiecksverband angeordnete, identische miteinander koppelbare Wechslerteile enthalten, d.h., also praktisch drei einzelne kleinere Werkzeugwechsler, denen ein entsprechend angepasster und ebenfalls entsprechend stärker dimensionierter Greifer zugeordnet werden kann, der der vorgegebenen Belastung genügt, wobei also bei diesem Beispiel die aufzunehmende Last gedrittelt auf die einzelnen Werkzeugwechsler verteilt wird. Es liegt also auch bei diesem, eine Einheit bildenden, vorbekannten "Dreifachwechsler" (siehe Figur 6) ein Hilfselement vor, das letztlich auch nur auf eine bestimmte Last abgestellt ist. Das Ganze ist also sowohl bei der vorerwähnten Serienbereithaltung als auch bei dem danach erwähnten Dreifachwechsler mit einem beträchtlichen Herstellungs- und Bereithaltungsaufwand verbunden, da alle diese Werkzeugwechsler auf einen bestimmten Belastungsfall bzw. einen bestimmten Belastungsbereich abgestellt sind.

Der Erfindung liegt die Aufgabe zugrunde, ausgehend von einem Werkzeugwechsler der zuletzt genannten Art, für eine Verbesserung hinsichtlich Fertigungs- und Bereitstellungsaufwand zu sorgen.

Diese Aufgabe ist nach der vorliegenden Erfindung mit einem Werkzeugwechsler mit den im unabhängigen Patentanspruch 1 enthaltenen Merkmalen gelöst. Vorteilhafte Ausführungsformen und Weiterbildungen ergeben sich nach den abhängigen Patentansprüchen.

Wie ersichtlich, ändert sich dabei an der Grundkonzeption eines Werkzeugwechslers nichts, wohl aber an dessen bzw. deren Zuordnung sowohl zum Handhabungsgerät (Roboter) als auch zum Werkzeug. Mit anderen Worten ist nunmehr erfindungsgemäß vorgesehen, zum einen zwischen den Elementen des Wechslers, nämlich Aufnahmeteil und Einsteckteil, nachfolgend Kopplungsteile genannt, und den zugehörigen Anordnungs- bzw. Tragelementen, nämlich Roboterarm einerseits und Werkzeug andererseits, jeweils eine Adapterplatte lösbar anzuordnen und zum anderen diese Adapterplatten mit einem den einzelnen Anordnungsrastern der Verbindungselemente (nachfolgend Anschlussteile genannt) entsprechenden Mehrfachraster für Verbindungselemente zu versehen. Dadurch ist die Möglichkeit geschaffen, in Anpassung an eine vorgegebene Belastung einen oder mehrere Einzelwechsler an den entsprechend groß bemessenen Adapterplatten anzuordnen und in geeigneter Weise zu fixieren. Unter Mehrfachraster ist also dabei ein Rastermuster für Verbindungselemente zu verstehen, der das Rastermuster der die Kopplungsteile aufweisenden Anschlussteile enthält, wodurch also mehrere Werkzeugwechsler jeweils mit ihren Teilen und in belastungsentsprechender Anzahl den Adapterplatten zugeordnet und an diesen befestigt werden können, gegebenenfalls aber auch nur ein Werkzeugwechsler. Die vorerläuterte und bislang praktizierte Bereitstellung bzw. Benutzung auf bestimmte Belastungen abgestellte Werkzeugwechsler entfällt also erfindungsgemäß. Für den Hersteller und Anbieter solcher erfindungsgemäßer Werkzeugwechsler bedeutet dies vorteilhaft, gewissermaßen nur eine Werkzeugwechslergröße herstellen zu müssen, die aber mit identischen Wechslergrößen ergänzbar und an der jeweiligen Adapterplatte zusammenfügbar ist.

Der erfindungsgemäße und insofern belastungsabhängig variable Werkzeugwechsler und dessen vorteilhaften Weiterbildungen werden anhand der zeichnerischen Darstellung von Ausführungsbeispielen nachfolgend näher erläutert.

Es zeigt schematisch
- Figur 1: eine Wechslereinheit;
- Figur 2: eine Wechslereinheit in Anordnung an einem Roboterarm und einem Greiferwerkzeug;
- Figur 3: in Draufsicht eine Adapterplatte mit daran angeordneten Wechslereinheiten;
- Figur 4: in Draufsicht Wechsleranordnungen in besonderer Ausführungsform;
- Figur 5: im Schnitt eine bauliche Einzelheit und
- Figur 6: anschlussseitige Draufsichten auf die Ober- und Unterteile eines bekannten Werkzeugwechslers.

Zur Definition der nachfolgend benutzten Begriffe sei vorab Folgendes festgehalten: Der Werkzeugwechsler als Ganzes ist als Wechslermodul bezeichnet, dessen zu verkoppelbaren Teile sind als Wechslermodulteile 1, 2 bezeichnet, deren miteinander formschlüssig verrastbaren, lastaufnehmenden Teile als Kopplungsteile 4 und deren Tragelemente als Anschlussteile 3, mit denen die Wechslermodulteile 1, 2 an den Adapterplatten 5 und diese wiederum einerseits am Roboterarm und andererseits am Werkzeug zu befestigen sind.

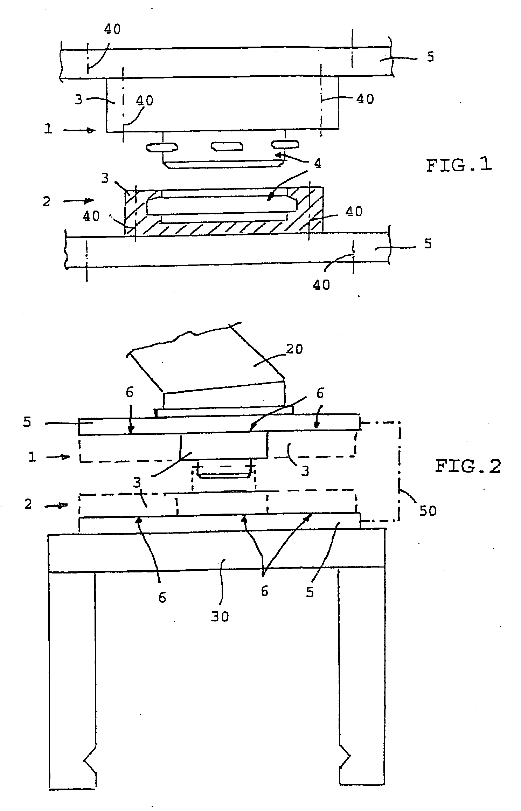

Unter Bezug auf Figur 6 besteht der Werkzeugwechsler, von dem hier als Stand der Technik ausgegangen ist, aus zwei miteinander verkoppelbaren Wechslermodulteilen 1, 2, die jeweils aus einem Anschlussteil 3 und mindestens einem dem Anschlussteil 3 zugeordneten Kopplungsteil 4 gebildet sind. Dass "mindestens" berücksichtigt dabei, dass, wie in Figur 6 dargestellt, die Anschlussteile 3 mit hier beispielsweise drei Kopplungsteilen 4 bestückt sein können. Unter Verweis auf Figur 1 handelt es sich bei den an ihren Anschlussteilen 3 angeordneten Kopplungsteilen 4 einerseits um ein Einsatzteil und andererseits um ein Aufnahmeteil, in das das Einsatzteil einsetz- und auf geeignete Weise verrastbar ist.

Für den erfindungsgemäßen Wechslermodul ist nun unter Verweis auf die Figuren 3, 4 wesentlich, dass dessen Wechslermodulteile 1, 2 anschlusssteilseitig jeweils eine Adapterplatte 5 lösbar zugeordnet ist, die zur Bestückung mit einer gewünschten Anzahl von Wechslermodulteilen 1, 2 mehrere Befestigungsbereiche 6 aufweist.

Bei den in Figur 2 an einem Handhabungsgerät 20 (Roboterarm) und an einem Werkzeug 30 (Greifer) mit verdeutlichten Teilen der Wechslermodulteile 1, 2 handelt es sich um auch baulich relativ kleine Einheiten, die beispielsweise jeweils für sich allein nur für eine relativ kleine Belastungsaufnahme ausgelegt sind und die im vorliegenden Fall gewissermaßen Grundeinheiten darstellen. Sollte nun eine größere Belastbarkeit gefordert werden, so muss nun nicht etwa eine größere und höher belastbar ausgelegter Wechslermodul benutzt werden, sondern es ist lediglich erforderlich, zur vorhandenen Grundeinheit je nach Anforderung ein oder mehrere identische Wechslermodulteile 1, 2 zu ergänzen, was von vornherein eine im Zuschnitt entsprechend große Adapterplatte 5 verlangt, d. h., die Adapterplatten 5 müssen in ihrer Flächengröße zur Nebeneinanderanbringung mehrerer Wechslermodulteile 1, 2 bemessen sein.

Um die Adapterplatten 5 dabei so klein wie möglich halten zu können, sind die Anschlussteile 3 jeweils mit einer mehreckigen Umfangskontur 9 im Sinne einer weitestgehend lückenlosen Zusammenfügung der Anschlussteile 3 an den Adapterplatten 5 ausgebildet. Vorteilhaft kommt dafür unter Verweis auf die Figuren 3 und 4 in Betracht, die Umfangskontur 9 der Anschlussteile 3 als symmetrisches Vieleck, vorzugsweise als Sechseck (wabenartig) auszubilden.

In diesem Zusammenhang sind an den Anschlussteilen 3 vorgesehene Befestigungselemente 40 in einem bestimmten Raster 7 angeordnet und die Adapterplatten 5 sind mit einem diesem Raster 7 entsprechenden Mehrfachraster 8 von Befestigungselementen 40 ausgestattet, wie dies in Figur 3 schematisch dargestellt ist.

Ferner können die Anschlussteile 3 an ihrer Umfangskontur 9 mit Ausbildungen 10 zu ihrer gegenseitigen Fixierung versehen werden, wobei es sich beispielsweise und wie in Figur 4 schematisch dargestellt, um kleine hinterschnittene Nuten handeln kann, in die entsprechend formangepasste Verbinder eingesetzt werden, von denen nur einige in Figur 4 angegeben sind.

Um die beiden miteinander verkoppelbaren Wechslermodulteile 1, 2 eines Wechslermoduls betätigen zu können, müssen diese Teile je nach ihrer Konstruktion mit einem diesbezüglich geeigneten Betätigungsmedium beschickbar sein, was beispielsweise hydraulisch, pneumatisch oder auch elektrisch bewirkbar ist. Da im vorliegendem Fall in der Regel mehrere Wechslermodulteile in Anordnung an den Adapterplatten 5 in Betracht zu ziehen sind, ist vorgesehen, dass die Anschlussteile 3 mit zueinander fluchtenden Anschlüssen 11 für die Zuleitung ihrer Betriebsmedien versehen sind. Zweckmäßig kann dadurch für die Versorgung einer ganzen Gruppe von Wechslermodulteilen 1, 2 ein geeigneter Zuleitungsmodul 12 an nur einem der Anschlussteile 3 vorgesehen werden (siehe Figur 4).

Es ist aber auch möglich, die notwendigen Adapterplatten 5, an denen die Anschlussteile 3 sitzen, mit Betriebsmediumskanälen und -anschlüssen (nicht besonders dargestellt) für die Anschlussteile 3 auszustatten, wobei darauf hinzuweisen ist, dass in der Regel dafür nur eine der Adapterplatten 5 in Anspruch zu nehmen ist, nämlich diejenige Platte, an der Anschlussteile 3 angebracht sind, die beispielsweise zu betätigende bzw. bewegliche Kopplungsteile 4 zur Verrastung enthalten.

Unter Verweis auf Figur 5 können die Anschlussteile 3 zumindest in Teilbereichen ihrer Ränder sich überlappend ausgebildet sein, in welchen Bereichen auch die Festlegung zu den Adapterplatten 5 erfolgt. Außerdem können die Adapterplatten 5 auch noch dafür ausgenutzt werden, dass das der tragelementenseitig der dortigen Adapterplatte 5 zugeführte Betriebsmedium in Schließ- bzw. Verrastungsstellung des Wechslers der anderen Adapterplatte 5 zugeleitet wird, um damit auch das dort fixierte Werkzeug 30 betätigen zu können. Eine solche Verbindung über eine Betriebsmittelzuleitung 50 zwischen den Adapterplatten 5 ist in Figur 2 nur strichpunktiert angedeutet.

### Bezugszeichenliste

- 1: Wechslermodulteil
- 2: Wechslermodulteil
- 3: Anschlussteil
- 4: Kopplungsteil
- 5: Adapterplatte
- 6: Befestigungsbereich
- 7: Raster
- 8: Mehrfachraster
- 9: Umfangskontur
- 10: Ausbildungen
- 11: Anschlüsse
- 12: Zuleitungsmodul
- 20: Handhabungsgerät
- 30: Werkzeug
- 40: Befestigungselemente
- 50: Betriebsmittelzuleitung

## Patentansprüche

1. Werkzeugwechsler, bestehend aus zwei miteinander verkoppelbaren Wechslermodulteilen (1, 2), die jeweils aus einem Anschlussteil (3) und mindestens einem dem Anschlussteil (3) zugeordneten Kopplungsteil (4) gebildet sind,
**dadurch gekennzeichnet,**
**dass** den Wechslermodulteilen (1, 2) anschlussteilseitig jeweils eine Adapterplatte (5) lösbar zugeordnet ist, die zur Bestückung mit einer gewünschten Anzahl von Wechslermodulteilen (1, 2) mehrere Befestigungsbereiche (6) aufweist.

2. Werkzeugwechsler nach Anspruch 1,
**dadurch gekennzeichnet,**
**dass** die Anschlussteile (3) jeweils mit einer mehreckigen Umfangskontur (9) im Sinne einer weitestgehend lückenlosen Zusammenfügung der Anschlussteile (3) an ihren Adapterplatten (5) ausgebildet sind.

3. Werkzeugwechsler nach Anspruch 2,
**dadurch gekennzeichnet,**
**dass** die Umfangskontur (9) der Anschlussteile (3) als symmetrisches, insbesondere rotationssymmetrisches Vieleck ausgebildet ist.

4. Werkzeugwechsler nach Anspruch 2 oder 3,
**dadurch gekennzeichnet,**
**dass** die Umfangskontur (9) der Anschlussteile (3) als Sechseck ausgebildet ist.

5. Werkzeugwechsler nach einem der Ansprüche 1 bis 4,
**dadurch gekennzeichnet,**
**dass** die Anschlussteile (3) mit Befestigungselementen (40) versehen sind und diese Befestigungselemente, (40) in einem bestimmten Raster (7) angeordnet und die Adapterplatten (5) mit einem diesem Raster (7) entsprechenden Mehrfachraster (8) von Befestigungselementen (40) versehen sind.

6. Werkzeugwechsler nach einem der Ansprüche 2 bis 5,
**dadurch gekennzeichnet,**
**dass** die Anschlussteile (3) an ihrer Umfangskontur (9) mit Ausbildungen (10) zu ihrer gegenseitigen Fixierung versehen sind.

7. Werkzeugwechsler nach einem der Ansprüche 1 bis 6,
**dadurch gekennzeichnet,**
**dass** die die einsteckbaren Kopplungsteile (4) aufweisenden Anschlussteile (3) mit zueinander fluchtenden Anschlüssen (11) für die Zuleitung ihrer Betriebsmedien versehen sind.

8. Werkzeugwechsler nach Anspruch 7,
**dadurch gekennzeichnet,**
**dass** mindestens eines der Anschlussteile (3) mit einem Zuleitungsmodul (12) für die Betriebsmedien versehen ist.

9. Werkzeugwechsler nach einem der Ansprüche 1 bis 8,
**dadurch gekennzeichnet,**
**dass** die Adapterplatte (5) mit Betriebsmediumskanälen und -anschlüssen für die Anschlussteile (3) versehen ist.

10. Werkzeugwechsler nach einem der Ansprüche 1 bis 9,
**dadurch gekennzeichnet,**
**dass** die Adapterplatten (5) untereinander mit einer lösbaren, zum Werkzeug führenden Betriebsmittelzuleitung (50) verbindbar sind.

## Claims

1. A tool changer, consisting of two changer module parts (1, 2) which can be coupled to one another and each of which is formed by a connecting part (3) and at least one coupling part (4) allocated to the connecting part (3),
**characterized in**
**that** on the connection side, the changer module parts (1, 2) are each allocated a detachable adapter plate (5) which has a plurality of fastening regions (6) for mounting thereon a desired number of changer module parts (1, 2).

2. The tool changer according to claim 1,
**characterized in**
**that** the connecting plates (3) are each provided with a polygonal peripheral contour (9) for the purpose of assembling the connecting parts (3) on their adapter plates (5) such that the assembly is gapless to the greatest possible extent.

3. The tool changer according to claim 2,
**characterized in**
**that** the peripheral contour (9) of the connecting parts (3) is formed as a symmetrical, in particular, rotationally symmetrical polygon.

4. The tool changer according to claim 2 or claim 3,
**characterized in**
**that** the peripheral contour (9) of the connecting parts (3) is formed as a hexagon.

5. The tool changer according to any one of the claims 1 to 4,
**characterized in**
**that** the connecting parts (3) are provided with fastening elements (40) and these fastening elements (40) are arranged in a particular grid (7), and the adapter plates (5) are provided with a multi-grid (8) of fastening elements (40) that corresponds to said raster (7).

6. The tool changer according to any one of the claims 2 to 5,
**characterized in**
**that** the connecting parts (3) are provided on their peripheral contour (9) with formations (10) for their mutual fixation.

7. The tool changer according to any one of the claims 1 to 6,
**characterized in**
**that** the connecting parts (3) comprising the insertable coupling parts (4) are provided with connectors (11) for supplying their operating media, wherein the connectors are aligned with one another.

8. The tool changer according to claim 7,
**characterized in**
**that** at least one of the connecting parts (3) is provided with a supply module (12) for the operating media.

9. The tool changer according to any one of the claims 1 to 8,
**characterized in**
**that** the adapter plate (5) is provided with operating medium channels and connections for the connecting parts (3).

10. The tool changer according to any one of the claims 1 to 9,
**characterized in**
**that** the adapter plates (5) can be connected to one another with a detachable operating medium supply line (50) that runs to the tool.

## Revendications

1. Changeur d'outils, constitué de deux pièces de module de changeur (1, 2) pouvant être couplées l'une à l'autre, qui sont formées respectivement d'une pièce de raccordement (3) et d'au moins une pièce d'accouplement (4) coordonnée à la pièce de raccordement (3),
**caractérisé en ce que**
les pièces de module de changeur (1, 2) sont coordonnées de manière amovible à respectivement une plaque d'adaptateur (5) du côté de la pièce de raccordement, qui présente plusieurs zones de fixation (6) à des fins d'équipement avec un nombre souhaité de pièces de modules de changeur (1, 2).

2. Changeur d'outils selon la revendication 1,
**caractérisé en ce que**
les pièces de raccordement (3) sont respectivement conçues avec un contour circonférentiel (9) polygonal dans le but d'un assemblage substantiellement exempt d'espaces vides des pièces de raccordement (3) à leurs plaques d'adaptateur (5).

3. Changeur d'outils selon la revendication 2,
**caractérisé en ce que**
le contour circonférentiel (9) des pièces de raccordement (3) est conçu comme un polygone symétrique, notamment symétrique en rotation.

4. Changeur d'outils selon les revendications 2 ou 3,
**caractérisé en ce que**
le contour circonférentiel (9) des pièces de raccordement (3) est conçu comme un hexagone.

5. Changeur d'outils selon une des revendications 1 à 4,
**caractérisé en ce que**
les pièces de raccordement (3) sont pourvues d'éléments de fixation (40) et ces éléments de fixation (40) sont disposés dans un quadrillage (7) déterminé et les plaques d'adaptateur (5) sont pourvues d'un quadrillage multiple (8) d'éléments de fixation (40) correspondant à ce quadrillage (7).

6. Changeur d'outils selon une des revendications 2 à 5,
**caractérisé en ce que**
les pièces de raccordement (3) sont pourvues sur leur contour circonférentiel (9) de configurations (10) en vue de leur fixation mutuelle.

7. Changeur d'outil selon une des revendications 1 à 6,
**caractérisé en ce que**
les pièces de raccordement (3) présentent des pièces d'accouplement (4) enfichables sont pourvues de raccords (11) s'alignant les uns avec les autres en vue de leur alimentation en fluides d'exploitation.

8. Changeur d'outils selon la revendication 7,
**caractérisé en ce que**
au moins une des pièces de raccordement (3) est pourvue d'un module d'alimentation (12) pour les fluides d'exploitation.

9. Changeur d'outils selon une des revendications 1 à 8,
**caractérisé en ce que**
la plaque d'adaptateur (5) est pourvue de canaux et de raccords de fluide d'exploitation pour les pièces de raccordement (3).

10. Changeur d'outils selon une des revendications 1 à 9,
**caractérisé en ce que**
les plaques d'adaptateur (5) peuvent être reliées les unes sous les autres par une alimentation en fluide d'exploitation (50) amovible, menant à l'outil.
